Europäisches Patentamt

European Patent Office

Office européen des brevets

(19)

(11) Publication number: **0 129 895**
**A1**

(12) **EUROPEAN PATENT APPLICATION**

(21) Application number: **84107246.5**

(22) Date of filing: **25.06.84**

(51) Int. Cl.⁴: **G 06 F 3/023**

(30) Priority: **28.06.83 US 508635**

(43) Date of publication of application:
**02.01.85 Bulletin 85/1**

(84) Designated Contracting States:
**DE FR GB IT**

(71) Applicant: **HONEYWELL INC.**
**Honeywell Plaza**
**Minneapolis Minnesota 55408(US)**

(72) Inventor: **Carmody, Joseph P.**
**1250 Bridle Path Drive**
**Lansdale Pennsylvania 19446(US)**

(74) Representative: **Rentzsch, Heinz et al,**
**Honeywell Europe S.A. Holding KG Kaiserleistrasse 55**
**Postfach 184**
**D-6050 Offenbach am Main(DE)**

(54) **Control system with switches and associated indicators.**

(57) A machine control panel (4) includes a matrix of pressure sensitive switches (10) and a matrix of light emitting indicators (12) in a substantially coplanar array. A selectively configurable control system (6) is connected to the LED and switch array to recognize only switch actuation inputs from preselected valid switches, e.g., those identified by labels (22), and, in turn, to energize only LED's associated with actuated valid switches. Thus, the configurable control system is used to transfer the valid switch operation to the controlled machine while providing an LED indication on the machine control panel of valid switch actuation and associated machine system operation.

./...

FIG. 3

HONEYWELL INC.                    June 20, 1984
Honeywell Plaza                   I1104312 EP
Minneapolis, Minn. USA            HR/ep

Control System with Switches and Associated Indicators

The present invention relates to a control system for a selectively configurable machine control panel providing selectively operable switches and indicators associated with a machine to be controlled.

Machine control panels having a fixed display of a system controlled by the panel are well-known in the art, e.g., the control panel shown in U.S. Patent No. 3,187,321. While such prior art panels are useful to enable an operator to visualize the control effects of the switches on the panel, they are severly limited in their correlation to a particular system whereby each control panel is custom made for a particular application. Thus, they are not interchangeable among different systems and are inherently incapable of providing a maximum utility from the panel components. In order to increase the adaptability of such control panels, later developments included the use of overlays providing different sets of indicia as shown in U.S. Patent No. 4,158,130 and correlated auxiliary displays with switch functions thereon as shown in U.S. Patent No. 4,333,097. However, none of these displays and control panels offered a maximum adaptability to differing control systems while retaining a simplicity in the structure and operation thereof. Thus, the prior art control panels were associated with a particular system by virtue of being designed in a permanent one-to-one relationship whereby switches, indicators, labels, etc. were correlated to a specific application. Such control panels did not provide a universality in adapting the control panel for user changes induced by changes in the machine or system controlled by the panel. Further, such control panels were not economical to produce since they were only suitable for a specific end use. Accordingly, the utilization of those control panels would be terminated when the use for which the panel was designed became obsolete.

An object of the present invention is to provide an improved control system for a selectively configurable machine control panel. A control panel which would be economical to manufacture and purchase in small numbers must be adaptable throughout its operating life to whatever machine or system is to be controlled thereby. Such a universal and adaptable control panel would yield a maximum return on the investment therein while minimizing production cost, service cost, parts inventory and operator training time. Accordingly, it is desirable to provide a machine control panel which is universal in its applications and which offers a maximum utilization and adaptability of its components in a simple and low cost structure.

These objects are achieved by the invention as characterized in claim 1. Preferred improvements are described in the subclaims.

The control system according to the present invention for a machine control panel having an array of switches and indicators comprises selectively configurable means for storing data identifying valid ones of the switches and indicators and control means for recognizing valid switch actuations and energizing valid ones of the indicators as defined by the stored data.

A better understanding of the present invention may be had when the following detailed description is read in connection with the associated drawings, in which:

Figure 1 is a block diagram of a machine control system embodying an example of the present invention.

Figure 2 is a pictorial illustration of a machine control panel for use in the system shown in Figure 1 and

Figure 3 is a block diagram of a configuration control for use with the system shown in Figure 1.

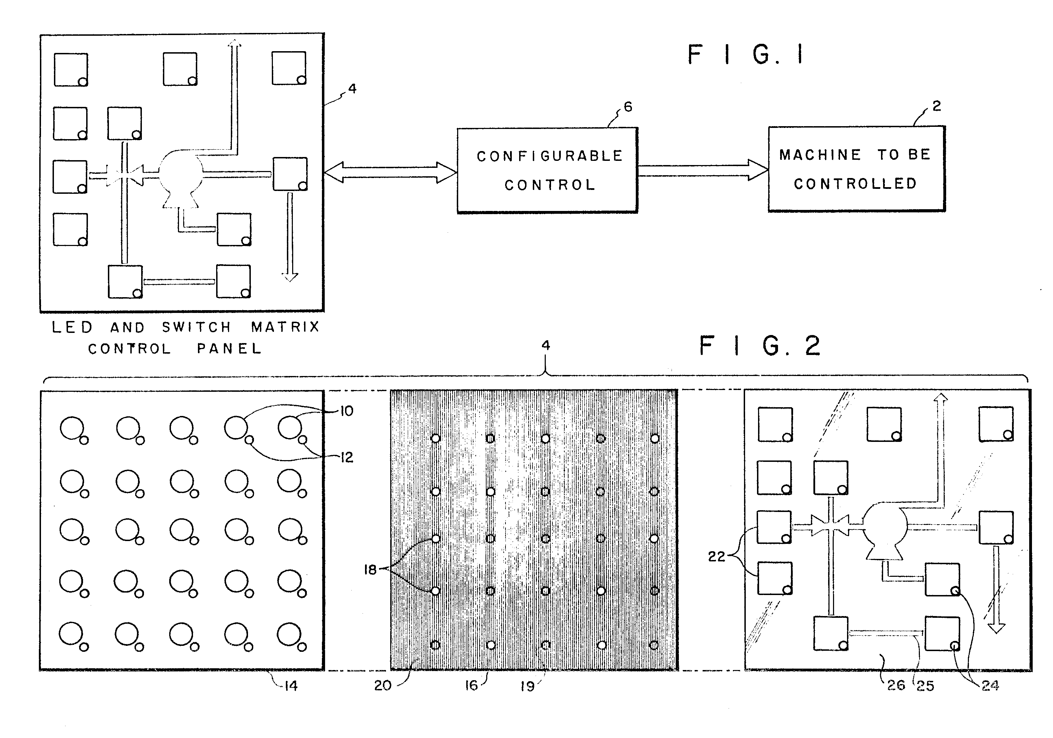

Referring to Figure 1 in more detail, there is shown a machine control system embodying an example of the present invention for controlling a machine 2, e.g., a machine having selectively operable controls thereon. A matrix of a plurality of light emitting indicators, e.g., light emitting diodes (LED's), and selectively operable switches arranged as a control panel 4 is used to provide an operator interface for producing control signals for the machine to be controlled and to provide a visible display of valid switch actuations, and control system status indications. For purposes of illustration, an example of a control configuration for a specific machine control system is shown on the control panel 4. The machine control panel 4, as described more fully hereinafter with respect to Figure 2, is arranged as a full matrix of pressure sensitive switches and LED's residing in a protective and supportive enclosure and having a flexible cover over the matrix with light transmissive, e.g., transparent, apertures aligned with selected or valid ones of the LED's in the LED and switch array 4.

A configurable control 6 is interposed between the switch matrix 4 and the machine to be controlled 2 to accept switch actuation signals from valid switches on the switch array 4 and to provide energizing signals for valid LED's, e.g., LED's associated with actuated valid switches, and LED's signaling machine operations while transferring the control signal from the actuated valid switch to the machine to be controlled 2 to produce a corresponding control operation. The configuration control 6 is also effective to ignore actuation signals from invalid switches 10 as determined in a specific application of the switch and indicator matrix 4 and to prohibit energization of undesired LED's, e.g., those associated with invalid switches.

In Figure 2, there is shown a pictorial illustration of a control panel suitable for use as the control panel 4 shown in Figure 1. A plurality of selectively actuable pressure sensitive switches 10 and LED indicators 12 are arranged in a matrix in a first support layer 14. The switches and LED's 10, 12 and layer 14 may be any suitable devices capable of providing a fixed matrix of pressure sensitive switches and indicators in a substantially coplanar array, such devices being well-known in the art. An adjacent second layer 16 of a flexible material capable of transferring switch actuation pressure to the switches 10 provides a matrix of light transmissive apertures 18 surrounded by an opaque coating 20. For example, the second layer 16 may be generally of a transparent material with the apertures 18 being gaps in the opaque coating 20. The apertures in the second layer 16 are aligned with the LED's 12 in the first layer 14. To correlate the second layer 16 to a specific application of the control panel 4, selected ones of the apertures 18 are retained in a light transmissive state while the other unneeded apertures in the aperture matrix 16 are selectively covered by opaque covers 19.

Labels 22 with indicator apertures 24 are placed on the aperture array 16 with the indicator apertures 24 aligned with the unblocked ones of the apertures 18 whereby light emissions from energized LED's would be transmitted through the aperture 24 in the label 22 and the aperture 18 in the aperture layer 16. Other labels 25 showing unilluminated switches and system interconnectors, etc. are also selectively placed on the aperture array 16. A transparent third layer 26 may be used to protect the labels 22 and the other display elements 25 appropriately placed on the aperture array to form a desired machine control panel. The third layer 25 is also made of a flexible material capable of transmitting a switch actuation motion to the switches 10 in the first layer 14. A suitable enclosure, not shown, may be provided for housing the machine control panel 4 while enabling electrical connections to be made thereto. The housing may advantageously include a door for limiting access to the machine control panel 4 while increasing the protection of the machine control panel 4 from the surrounding environment.

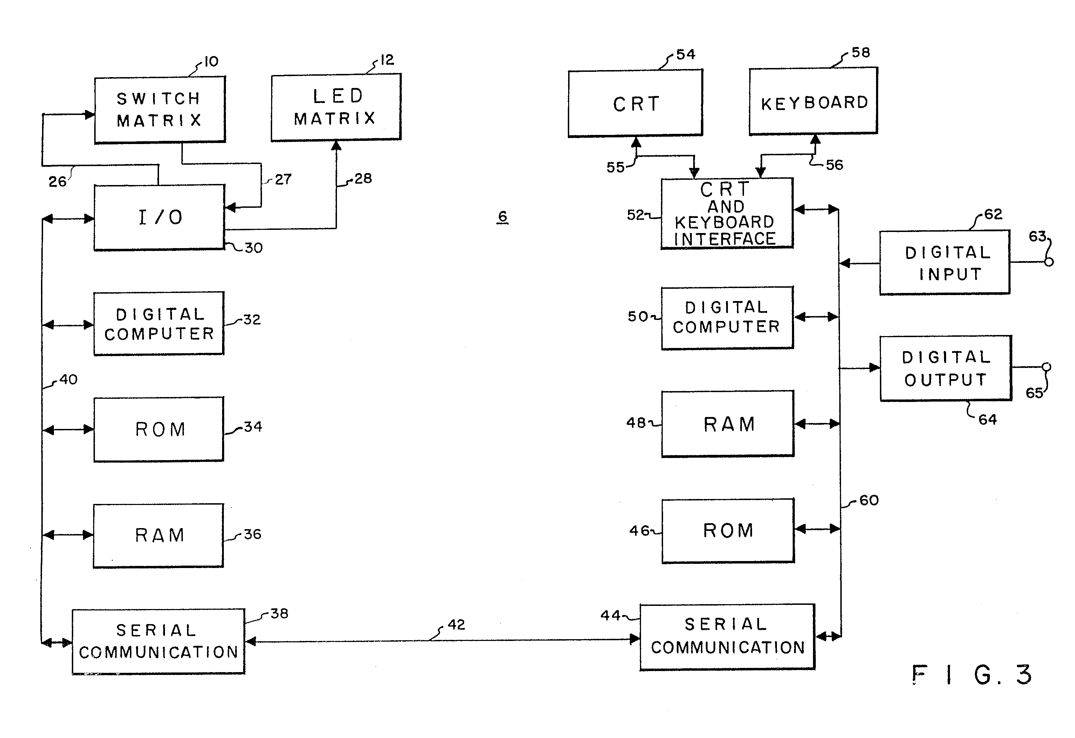

In Figure 3, there is shown a block diagram for the configurable control 6 shown in the system illustrated in

- 6 -

Figure 1. The control 6 is effective to accept switch actuation inputs from valid ones of the switches in the switch and LED array 4 and to energize corresponding ones of the LED's, e.g., to provide an indication of the switch actuation of the valid ones of the switches 10. Additionally, the control 6 is effective to energize additional ones of the LED's 12 to provide a further indication of system operation. The energized LED's are arranged beneath unblocked ones of the apertures 18. Thus, the presence of a complete matrix of switches 10 and LED's 12 in the first layer 14 is configured into a desired switch and LED array for a specific control panel application by the configurable control 6 which accepts inputs from desired ones of the switches 10 and ignores switch actuations which are not a part of the desired switch array. Concurrently, the configurable control 6 energizes LED's associated with respective valid ones of the switches 10 and other desired LED's to indicate machine operations and does not provide an energization of undesired ones of the LED's 12, e.g., those associated with the invalid ones of the switches 10. The presence of a complete matrix of a plurality of switches and LED's in the first layer 14 provides the maximum capability for organizing the machine control panel 4 to enhance the versatility of the machine control panel whereby the switches 10 and LED's 12 may be arranged to function in a desired control panel configuration within the matrix capabilities. Thus, the control panel 4 is universal in its applicability and can be easily adapted for a multitude of applications by a simple rearrangement of opaque covers 19 and labels 22, 25 to correlate it with a specific machine or system to be controlled.

Referring to Figure 3 in more detail, the switches 10 are shown as a switch matrix 10 and the LED's 12 are shown as an LED matrix 12. Thus, the selectively configurable control 6 is arranged to provide a control function for the switches 10 in a procedure which is similar though separate from that provided for the LED's 12. The switch matrix 10 is connected by input lines 26 and output lines 27 while the LED matrix 12 is only connected by output lines or energizing lines 28 to an input/output (I/O) circuit 30. The I/O circuit 30 is divided into separate sections for handling the switch matrix 10 and LED matrix 12. The I/O circuit 30 can include a multiplexer for scanning the rows and columns of the switch matrix 10 to detect and identify an actuated one of the switches 10. A digital computer 32, which may be in the form of a microprocessor, a read-only-memory (ROM) 34 for storing computer operating programs, a random access memory (RAM) 36 for storing a table of valid switch locations, and a serial communication circuit 38 are connected to data bus 40 which is also connected to the I/O circuit 30. These circuit elements 30, 32, 34, 36, 38 and 40 may be advantageously located within the housing for the control panel 4. With such a resident arrangement, the serial communication circuit 38 provides a communication interface with a two wire cable 42 interconnecting the serial communication circuit 38 with a remote serial communication circuit 44.

The remote serial communication circuit 44 may be part of a central controller which may also include a ROM 46, a RAM 48, a digital computer 50, a CRT and keyboard

- 8 -

interface 52 connected to a CRT display 54 by signal cable 55, and a signal cable 56 to a keyboard 58. A databus 60 is arranged to interconnect the ROM 46, the RAM 48, the digital computer 50 and the interface 52 with the serial communication circuit 44 and with a digital input circuit 62, which is connected to a digital input terminal 63, and a digital output 64, which is connected to a digital output terminal 65. The detailed operation of all of these data storing, transmitting and processing elements is conventional and well-known in the art. Accordingly, a further discussion thereof is believed to be unnecessary for a complete understanding of the present invention. The keyboard 58 in the central controller can be arranged to enable an operator to provide the information for selectively configuring the control panel 4 by storing in the RAM 48 a table of the valid switches and LED's in a specific control panel application. For example, in a control panel having a matrix of 32 switches and 64 LED's, the information is stored on the individual switches and LED's as 8 bit entries each representing a valid switch location and LED location in a row and column format. This table is periodically read out from the RAM 48 via a stored program in the ROM 46, and is serially communicated over the connecting link 42 to the serial communication circuit 38.

On the other hand, the selective actuation of a switch in the switch matrix 10 is detected, identified and stored in a table in the RAM 36 under the control of a program stored in the ROM 34. The actuated switch data is periodically compared with the table of valid switch data sent from the central controller to determine whether or

- 9 -

not the actuated switch is a valid switch. The transmission of the switch and LED table data and the comparison with the switch actuation data is, of course, performed at a very high electronic speed in comparison to the slow mechanical switch actuation operation. Thus, the entire switch validity table is compared at least once during the time that a switch is mechanically actuated by an operator. Similarly, a similar table with entries for valid LED's to be energized is sent to the control panel where each table entry represents a valid LED location in a row and column format. Finally, the digital computer 32 in the control panel 4, after comparing the switch actuation information, stores a table of switch actuation data in the form of digital words, e.g., four words or bytes of eight bits each for thirty two switches. Upon a request from the central controller, the computer 32 sends the stored digital words back to the central controller to identify the switch status. The digital computer 50 in the central controller, accordingly, produces a control word for application to the digital output 64 to provide an output signal on the output terminal 65 for operating the machine to be controlled 2 in response to the actuation of a valid switch. Digital inputs on the input terminal 63 which may originate at the machine to be controlled 2 are supplied to the central controller 50 for utilization in accordance with the stored program in the ROM 46 and may also produce digital outputs on the digital output 64.

Claims:

1. A control system comprising
a control panel (14) having a matrix of a plurality of
selectively actuable switches (10) and a matrix of selectively energizable light emitting indicators (12),
c h a r a c t e r i z e d   b y
selectively configurable means (6, 36) for storing data
identifying valid ones of said switches (10) and of said
indicators (12) and
control means (32) connected to said switches (10), said
indicators (12) and said configurable means (36) for
accepting output signals only from valid switches and for
energizing only valid indicators (12) as defined by said
data.

2. A control system according to Claim 1,   c h a r a c -
t e r i z e d   i n   t h a t   said configurable means
(6, 36) includes a memory (36).

3. A control system according to Claim 1 or 2, c h a r a c -
t e r i z e d   i n   t h a t   said control means (32)
includes means for comparing said stored data with output
signals from actuated ones of said switches (10).

4. A control system according to one of Claims 1 to 3,
c h a r a c t e r i z e d   b y   a serial data transmission line (38, 42, 44) connected to said control means
(32) for transmitting said data as a series of digital bits.

5. A control system according to Claim 4,   c h a r a c -
t e r i z e d   b y   a random-access-memory (48) for
storing said data after transmission from said configurable means (6, 36) and data representative of actuated
ones of said switches (10).

6. A control system according to one of the Claims 1 to 5,
c h a r a c t e r i z e d   i n   t h a t   said switches
(10) are pressure sensitive switches and said indicators (12) are light emitting diodes.

7. A control system according to Claim 5 or 6, c h a r a c -
t e r i z e d  b y  a keyboard (58) for selectively configurating the data stored in said configurable means (6,
36); and a data bus (60) connecting said keyboard (58)
to said random-access-memory (48) and said RAM to said
transmission line (38, 42, 44).

# F I G. 1

LED AND SWITCH MATRIX
CONTROL PANEL

CONFIGURABLE CONTROL

MACHINE TO BE CONTROLLED

# F I G. 2

0129895

F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | IBM TECHNICAL DISCLOSURE BULLETIN, vol. 20, no. 4, September 1977, pages 1288-1289, New York, US; C.J. PROKOP: "Validity mask processing of keystrokes" * Whole article * | 1-3,6 | G 06 F    3/023 |
| | --- | | |
| Y | DE-A-3 028 930   (ELASTA AG ELEKTRONIK) * Page  4 - page 5, line 3; page 6,  line 5 - page 7, line 7; page 8; figure * | 1-3,6 | |
| | --- | | |
| Y | FR-A-2 431 153  (REGIE NATIONALE DES USINES RENAULT) * Figures  1,2;  page  6,  lines 7-34; claim 1 * | 1-3,6 | |
| | --- | | **TECHNICAL FIELDS SEARCHED (Int. Cl. ³)** |
| A | US-A-4 280 121   (CRASK) * Abstract;  figures 2,3; column 3, lines 25-54 * | 1,4,5, 7 | G 06 F B 41 J |
| | --- | | |
| A | US-A-4 092 527  (LUECKE) * Abstract,  figures 3,5; column 1, line 31 - column 2, line 39 * | 1 | |
| | ----- | | |

The present search report has been drawn up for all claims

| Place of search THE HAGUE | Date of completion of the search 05-09-1984 | Examiner BECKER K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82